Europäisches Patentamt

(19) European Patent Office

Office européen des brevets

(11) Publication number : **0 483 174 B1**

# (12) EUROPEAN PATENT SPECIFICATION

(45) Date of publication of patent specification :
**22.11.95 Bulletin 95/47**

(51) Int. Cl.[6] : **G06F 17/30**

(21) Application number : **90909755.2**

(22) Date of filing : **28.06.90**

(86) International application number :
**PCT/GB90/00997**

(87) International publication number :
**WO 91/01026 24.01.91 Gazette 91/03**

(54) **A METHOD OF OPERATING A DATA PROCESSING SYSTEM.**

(30) Priority : **11.07.89 GB 8915875**
**13.11.89 US 435138**

(43) Date of publication of application :
**06.05.92 Bulletin 92/19**

(45) Publication of the grant of the patent :
**22.11.95 Bulletin 95/47**

(84) Designated Contracting States :
**AT BE CH DE DK ES FR GB IT LI LU NL SE**

(56) References cited :
**EP-A- 0 259 912**
**EP-A- 0 351 109**
**PC Magazine, Volume 9, No. 7, 10 April 1990,**
**(New York, US) R.W. KANE et al.: "The best**
**computer - 43,000 can buy", pages 233-252**

(56) References cited :
**PC Magazine, Volume 8, No. 14, August 1989,**
**(New York, US), E. MENDELSON:"Backup**
**Software: For the moment after", pages**
**269-272**

(73) Proprietor : **INTELLIGENCE QUOTIENT**
**INTERNATIONAL LIMITED**
**Summerfield Way**
**Chelston Business Park**
**Wellington Somerset TA21 9JE (GB)**

(72) Inventor : **MALCOLM, Peter, Bryan**
**Higher Long Park**
**Lewdown**
**Devon EX20 4PU (US)**

(74) Representative : **Abnett, Richard Charles et al**
**REDDIE & GROSE**
**16 Theobalds Road**
**London WC1X 8PL (GB)**

## Description

This invention relates to a method of operating a data processing system, and in particular to a method of providing copies of data stored in storage devices to guard against the possibility of the storage device becoming faulty or the data becoming corrupted, lost or, more recently, "infected by a computer virus". The invention is especially concerned with the provision of backups for personal computers (P.C.s).

With the increasing capacity of fixed storage media such as hard disk drives (now typically having storage capacities of upwards of 40 megabytes), the time and effort involved in making security copies of a disk is increasing.

At present, there are two options available to the average P.C. user. Commercial software exists to speed up the process of copying data onto a series of floppy disks. Whilst being an inexpensive solution, the method is tedious and time consuming. A 40 megabyte hard disk would at best require over 30 floppy disks to be fully copied, with the user required to change the disks throughout the backup.

The most effective option, however, is to copy the data on to a removable tape cartridge. Typically only one cartridge would be necessary, and for a 40 megabyte drive, the process would typically be completed in around fifteen minutes. One such system is described in EP-A-0259912 which describes a computer network in which a user may choose to pass files via the network to a central station for backing up. The central station comprises a tape device upon which the files are backed up. A user may restore a previously backed up file by requesting the central station to retrieve the file from the tape device and to pass it back via the network.

These methods have two drawbacks in addition to those already mentioned. Firstly, in each case, the user must make a conscious decision to perform the backup. The P.C. must be instructed to run the backup program, and the user must then wait for completion before a copy is available. Secondly no existing backup method gives total protection against loss of data since the copied data exists only as an image of the storage medium at the time the copy was made, and subsequently stored data cannot be protected. It is an object of this invention to provide a means of backing up stored data which offers the possibility of overcoming such disadvantages.

The present invention provides a backup system in which a copy of every change made to a storage medium is recorded as the change occurs. This backup recording can be stored in a variety of storage means, for example a tape drive, optical disk, or in another area of the basic storage medium.

The backup process may be controlled by software which causes the data in successive write operations to be copied to the backup storage means as a sequential list of write operations in such a manner that normal use of the computer, in particular, use of the application software, is substantially unaffected.

According to one aspect of the invention, there is provided a method of operating a microprocessor-based data processing system including a random access memory, a central processing unit and a non-volatile storage device, in which the central processing unit, operating according to instructions stored in the memory, is caused to write data periodically to basic storage means forming at least part of the storage device, characterised in that, for a plurality of such write operations the central processing unit is caused by the said instructions to execute a plurality of corresponding backup write operations to write the same data to backup storage means, each backup write operation being performed by means of a software routine stored in the memory, the said routine being associated with a routine for executing the said write operations for writing data to the basic storage means and in that the backup write operations are controlled such that the data for successive backup write operations are stored at different locations in the backup storage means whereby data which is overwritten in the basic storage means is retained in the backup storage means. This backup process thus occurs in real time. Since individual changes to the basic storage means take only fractional amounts of time, and since the backup copy may be made virtually simultaneously, there need not be any substantially noticeable change in the operation of the data processing system or its performance. The user may operate the system normally, and a backup copy of changes to the basic storage means can be made automatically, without any user intervention.

Preferably, the instructions referred to above, specifically the instructions for causing the backup write operations, are programmed into the system so as to form part of or an extension of the basic input/output system (i.e. at the basic input/output level). In the case of IBM - compatible machines, to which the invention is particularly applicable, the software is stored as an additional routine which is accessed by the system whenever a write operation is initiated. Thus, before each conventional write operation using the Interrupt 13 hex ("INT13h") routine, the machine is caused to execute an additional write operation for writing the data to the backup storage means additionally to a similar write to the basic storage means, when used in an IBM compatible system. By adding additional program code to INT13h, an instruction to write data using INT13h also results in the data being copied, together with the location in the basic storage means where it is to be written, to the backup storage means before continuing with the original routine. The copied information is preferably

2

stored as a sequential list of write operations. This means that the writing of a piece of data to the same location of the basic storage means more than once in succession would result in a list of separate commands being copied to the backup storage device. This backup method can be performed immediately, without affecting any application software being used on the system. In effect, it produces a complete audit trail of every change made to the device in such a manner that information is not lost.

The basic storage means may form part of or constitute any non-volatile storage device, but in the case of a personal computer is normally constituted by a so-called hard disk. The backup storage means may be part of or be constituted by a tape drive, another disk drive, an optical disc, or another part of a disk drive containing the basic storage means.

If the software for performing the method of the invention is stored at the basic input/output level, it can be made transparent to the user so as not to affect application software.

To restore information to destination storage means, which may be constituted by the same storage device as the basic storage means following a fault, or an alternative storage device, the sequential list of write operations stored in the backup storage means is simply replayed, and the original data copied to the destination storage means at the locations specified. Advantageously, this process can be stopped at any time so as to restore the data to the state in which it existed at any selected time. In this way, a selected number of most recent write operations can be ignored.

In the case of hard disk storage media, every hard disk has bad sectors, details of which are recorded in a File Allocation Table (FAT) when the disk is formatted on the system. If the disk fails because, for instance, a sector or sectors become damaged, then not only will data be lost but the disk will need to be reformatted, thereby creating a new FAT. As part of the preferred method of operation in accordance with this invention, the FAT for the basic storage means is stored in the backup storage means, generally as the first piece of information, so that for restoring, the system is able to modify the addresses of data stored in the backup storage means when restoring to a new disk or reformatted disk.

Thus, preferably, there is provided a method of operating a data processing device including providing backup storage means for storing as a sequential list write operations written to basic storage means, each write operation being stored in the basic storage means as a location element and a data element, the location element containing information relating to the location of the data when stored in the basic storage means. Restoring of the data from the backup storage means to destination storage means includes determining the location of faulty parts of the destination storage means and establishing a translation table for allocating to the data elements new location elements in place of the stored location elements for restoring the data elements to correctly functioning parts of the destination storage means. The method may also include alteration of a file allocation table and directories followed by each sub-directory, so that any address reference held by the original operating system is altered to reflect a change in its location whereby the operating system and hence the application software can then make use of the data as stored on the destination storage means.

According to another aspect of this invention, a microprocessor-based data processing system comprises a random access memory, a central processing unit, a non-volatile basic storage means, and non-volatile backup storage means, characterised in that the system is programmed to perform a backup write step corresponding to each write operation in which data is written to the basic storage means, the backup write steps comprising the writing of the write operation to the backup storage means as a location block and a data block, the location block containing information relating to the location of the data block in the basic storage means, and wherein the system is further programmed to write successive said write operations to the backup storage means as a sequential list, each location and data block pair being stored in a different respective location in the backup storage means, the backup write step being performed according to a software routine stored in said memory and associated with a routine for executing said write operation in which data is written to said basic storage means.

The invention will now be described by way of example with reference to the drawings:-

| | |
|---|---|
| Figure 1 | is a block diagram of a personal computer and a cartridge tape drive, |
| Figures 2A and 2B | are diagrams illustrating a system memory map at the basic input/output level of a conventional personal computer and a computer modified to operate in accordance with the method of the invention respectively, |
| Figure 3 | is a diagram illustrating the organisation of the data when stored in a backup storage medium, |
| Figure 4 | is a flow chart of a method for recording data in a backup operation, and |
| Figure 5 | is a flow chart illustrating a restoring operation. |

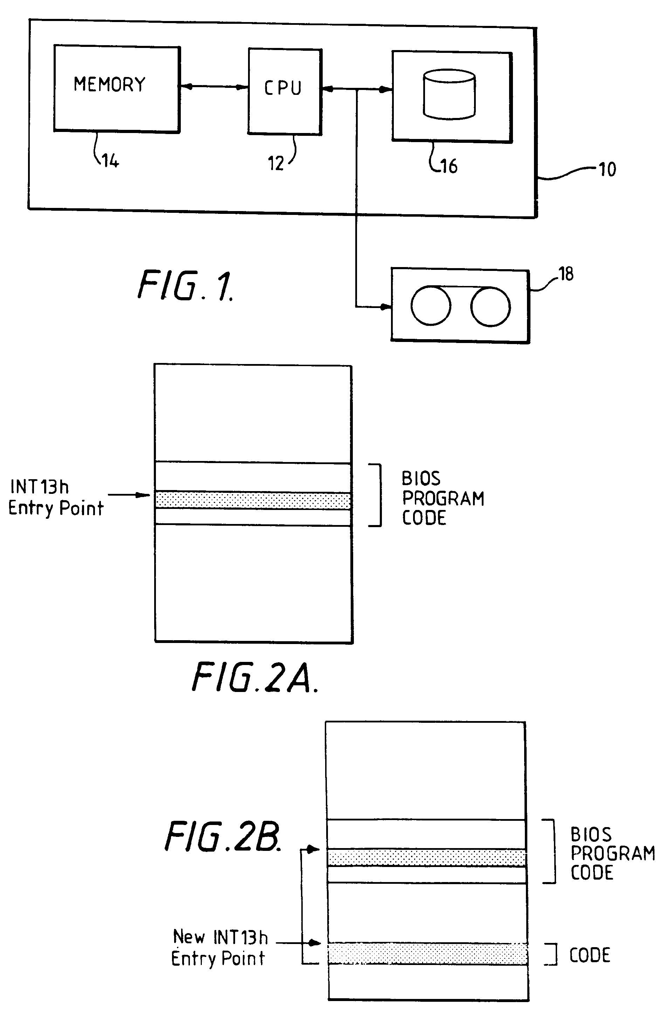

Referring to Figure 1 of the drawings, a personal computer 10 typically comprises a central processing unit 12, a random access memory 14, and a non-volatile storage device in the form of a hard disk drive 16. In this example, for the purpose of providing backup storage means, a tape unit 18 is coupled to the computer 10.

The invention is particularly applicable to IBM compatible personal computers, i.e. the majority of personal computers using processor chips type numbers 8086, 8088, 80286, 80C286, 80386, 80386SX and 80486 manufactured by Intel. In such computers, whenever a program requires the storage of data in the hard disk drive, it places data in a memory buffer and calls a standard routine which writes data to the disk. This routine, known as Interrupt 13 hex (INT13h) is permanently programmed into the hardware of the computer's disk drive controller and forms part of the basic input/output system (BIOS) built into the computer. This routine is shown in Figure 2A as INT13h forming part of the BIOS program code in a system memory map, the INT13h entry point being shown by an arrow. To carry out a preferred method in accordance with the invention, additional program code is added at the basic input/output level as shown in Figure 2B. In practice, this can be loaded into the computer as a device driver using the CONFIG.SYS file.

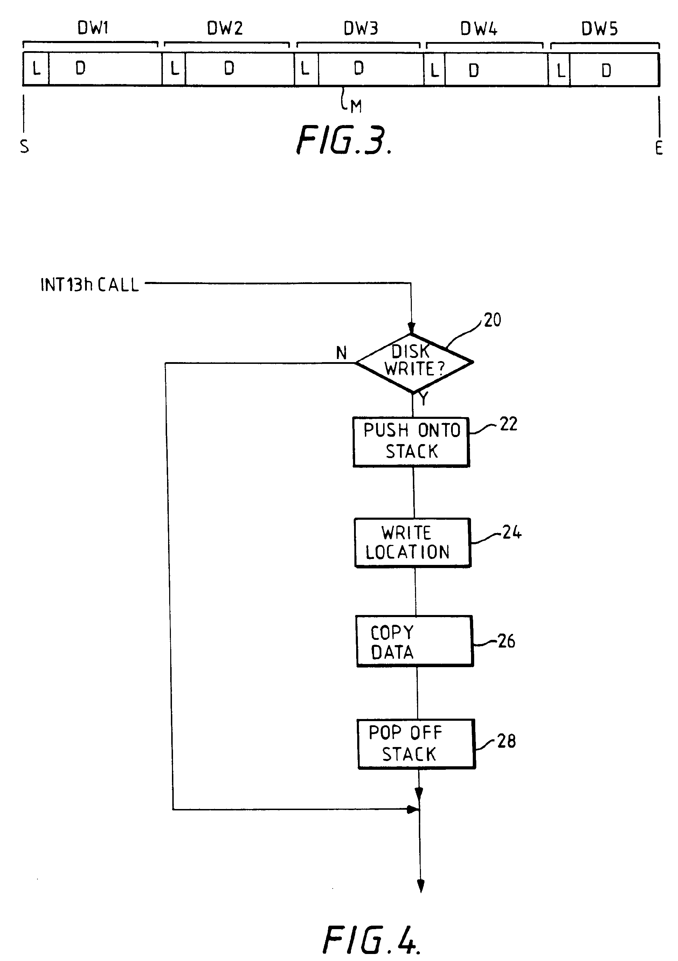

The added software has the effect of an instruction to write data being interpreted not only as an instruction to write data to the disk drive 16 but also to the tape drive 18. Preferably, writing to the tape drive takes place first. Thus, the write instruction involves a new entry point as shown arrowed in Figure 2B, whereupon the new program code causes information in the form of a location block followed by a data block to be written to the tape drive, the location block containing the track number of the disk drive to which the data would be written by the INT13h routine, the sector number, the disk drive head, the drive identification, and the length of the data in terms of the number of sectors. In effect, successive write operations are stored as a sequential list of operations, each disk write operation DW1, DW2, ... being identified by a block pair comprising the location block L and data block D as shown in Figure 3, the backup storage means M (the tape drive) having a start S and end E, as shown. Once the backup write operation has been performed, the normal write operation to the disk drive is performed using the conventional BIOS program code, as if nothing different had happened.

The relevant sequence of operations is shown in the flow chart of Figure 4. On receipt of an INT13h call, the program first checks, in step 20 whether the call is a write call. If it is, the contents of the microprocessor registers are preserved in memory by a PUSH instruction to stack (step 22). The register location details are then written to the backup storage means, the tape drive, as the location block in step 24, followed by the data copied from the memory buffer as the data block (step 26). The register contents are then returned to the microprocessor registers from the stack by a POP instruction 28, whereupon the conventional write operation to the basic storage means the computer disk, can tape place beginning at the original INT13h entry point as if the backup write operation just described had never been performed.

As a result of this sequence of events, after a period of time and several write operations, the tape drive 18 contains a complete record of all data information stored on the disk drive, including information which has been overwritten by write operations being performed more than once to the same locations.

Should an error on the disk occur, the backup can be replayed, reproducing all of the disk changes at high speed and restoring the data (generally to the reformatted disk drive).

All hard disks contain a small proportion of unusable sectors. These are identified in the operating system by a program which , in IBM - compatible machines is referred to as the DOS FORMAT program, and are marked as bad in the file allocation table (FAT) stored on every disk. DOS checks the information in the FAT to avoid using these bad areas. It is highly unlikely that two hard disks (even of exactly the same type) would have the same pattern of bad sectors. Any given hard disk will develop additional bad sectors over its life, which means that if the disk is then reformatted, the additional bad sectors will be marked in the FAT and the disk can continue to be used. From the above it will be clear that the layout of bad sectors on a disk to which the stored backup data is required to be restored will generally be different from the layout of the disk which was operative when the backup copy was taken.

To overcome the difficulty of restoring data to a disk with a different layout of bad sectors, the location blocks referred to above are altered. In particular, the location blocks are altered so that the data can be written to another location on the disk without following data from the backup tape overwriting it. In addition, the file allocation table and directories in the personal computer are changed so that data is read from good sectors of the disk to which the backup data has been restored. Of course, this means that data can be restored to a destination storage means having a different physical layout from the original. The destination storage means may, for example, be a disk which may be the same disk as that of the basic storage means or a different disk. The capacity of the drive can be similar, but the combination of sectors, tracks, and heads could be different.

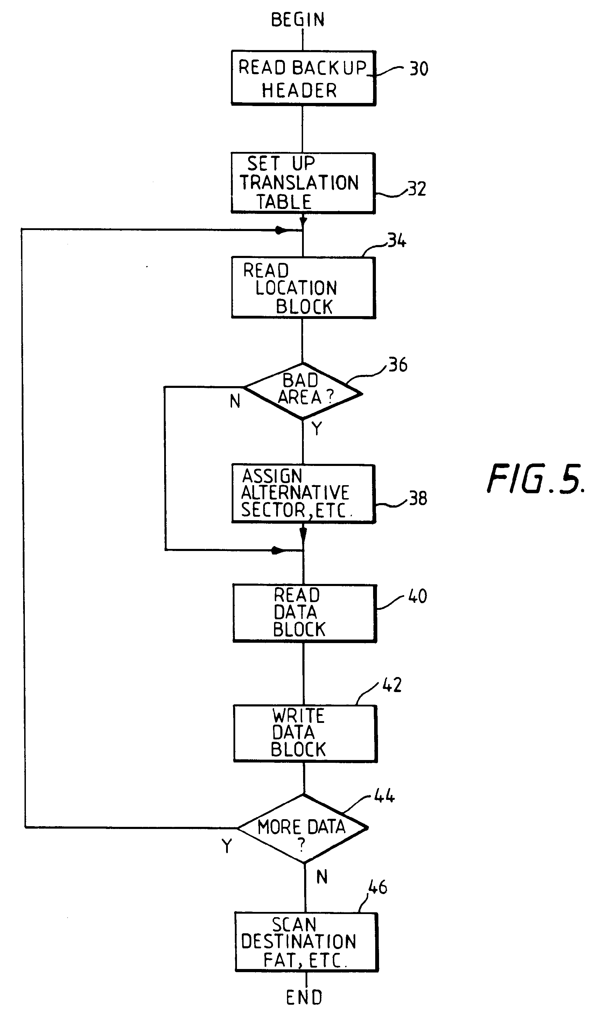

Referring to Figure 5, the recovery procedure begins with a read step 30 in which the header of the backup storage means is read to establish the size of the storage means and its FAT. At this point the track/sector/head information in each location block is connected into a single logical sector number, where 0 is the first sector on the original disk (track 0, head 0, sector 1) and X is the last sector number (last track, last head, last sector).

Next, a FAT translation table is established (step 32) in memory and the memory is cleared ready for new data. The translation table is initially empty. The first location block is read from the backup storage means (step 34) and a check is made for any bad part of the corresponding area in the destination storage means (step 36). If the area is bad, an alternative sector of the destination storage means is assigned in step 38 and the change in location is noted in the translation table. In other words, the original logical sector number of the location block is converted to a number representing a new track/sector/head coordinate based on the parameters of the destination storage means so that a one-to-one correlation occurs between the logical layouts of the original and destination storage means. Any further attempts to write to the same bad sector are instead interpreted as writes to this newly assigned sector.

Having assigned an alternative sector, the relevant data block is read from the backup storage means (step 40) and written to the destination storage means (step 42). Naturally, if the check made in step 36 indicates that the area of the destination storage means corresponding to the sector number in the original location block has no bad parts, no alternative sector need be assigned and the instructions of steps 40 and 42 are executed immediately after the checking of step 30.

If the software later attempts to write data over a sector which is itself an area of re-assigned data then the software re-assigns that area also. Thus, as the write operations spoilt by the backup storage means are restored to the destination storage means, the table is progressively filled with translated location data.

If there are further location and data blocks (determined in step 44), the program loops back to step 34 and the above-described steps 34 to 44 are repeated for each location and data block pair until all of the required data in the backup storage means has been written to the destination storage means.

Provided that there are as many free sectors on the destination storage means as were used on the original disk (a pre-requisite of the restore operation of any backup system), no data will be overwritten or lost.

Whilst the data now all exists on the destination storage means, areas have been moved and the operating system of the computer (DOS) is no longer configured to operate with the data layout. To deal with this, the backup software scans the FAT, then the root directory, followed by each sub-directory, changing the address (cluster) references (which are in known locations) of any area which have been re-mapped in the translation table (step 46). Any such address reference held by DOS is therefore altered to reflect a change in its location, and DOS can once again understand the layout of the storage means and all data will be intact.

An example of part of the restore process will now be given. The reader is referred to the IBM DOS Technical Reference Manual for background material, if required. The disclosure of this Manual is included in this specification by reference.

Suppose the destination storage means, hereinafter referred to as the destination disk, has a fault in clusters 26 and 27 (001A and 001B hex) so that these clusters cannot be used. When an attempt is made at restoring to these clusters, the software determines that they are marked as bad and it is necessary to re-map the clusters to another free location, say clusters 192 and 193 (00C0 and 00C1 hex).

The internal translation table would read as follows:-

| Source | Destination |
|--------|-------------|
| 26     | 192         |
| 27     | 193         |

The original FAT might appear as in the following table:-

**Partial Hex Dump of Original FAT Sector**

## TABLE 1

```
000  F8 FF FF FF 03 00 04 00 05 00 06 00 07 00 08 00
010  09 00 0A 00 0B 00 0C 00 0D 00 0E 00 0F 00 10 00
020  11 00 12 00 13 00 14 00 15 00 16 00 17 00 18 00
030  19 00 1A 00 FF FF 1C 00 1D 00 1E 00 1F 00 20 00
040  21 00 22 00 23 00 24 00 25 00 26 00 27 00 28 00
050  29 00 2A 00 2B 00 2C 00 2D 00 2E 00 2F 00 30 00
060  31 00 32 00 33 00 FF FF 35 00 36 00 37 00 38 00
070  39 00 3A 00 3B 00 3C 00 3D 00 3E 00 3F 00 40 00
080  41 00 42 00 43 00 44 00 45 00 46 00 FF FF 00 00
090  00 00 00 00 00 00 00 00 00 00 00 00 00 00 00 00
0A0  00 00 00 00 00 00 00 00 00 00 00 00 00 00 00 00
0B0  00 00 00 00 00 00 00 00 00 00 00 00 00 00 00 00
0C0  00 00 00 00 00 00 00 00 00 00 00 00 00 00 00 00
0D0  00 00 00 00 00 00 00 00 00 00 00 00 00 00 00 00
0E0  00 00 00 00 00 00 00 00 00 00 00 00 00 00 00 00
0F0  00 00 00 00 00 00 00 00 00 00 00 00 00 00 00 00
```

Note that byte pair FF FF marks End of File.

In the translated FAT on the destination disk (shown below in Table 2), references to the re-mapped clusters are changed to their translated address, thus the reference to cluster 26 (shown underlined) must be changed to cluster 192 (00C0 hex).

Cluster 27 was marked as End of File in the original FAT and remains so in its translated location at cluster 193.

Note that cluster 26 and 27 are now marked bad with the byte pair F7 FF.

**Partial Hex Dump of FAT After References Changed**

<u>**TABLE 2**</u>

```
000   F8 FF FF FF 03 00 04 00 05 00 06 00 07 00 08 00
010   09 00 0A 00 0B 00 0C 00 0D 00 0E 00 0F 00 10 00
020   11 00 12 00 13 00 14 00 15 00 16 00 17 00 18 00
030   19 00 CO 00 F7 FF F7 FF 1D 00 1E 00 1F 00 20 00
040   21 00 22 00 23 00 24 00 25 00 26 00 27 00 28 00
050   29 00 2A 00 2B 00 2C 00 2D 00 2E 00 2F 00 30 00
060   31 00 32 00 33 00 FF FF 35 00 36 00 37 00 38 00
070   39 00 3A 00 3B 00 3C 00 3D 00 3E 00 3F 00 40 00
080   41 00 42 00 43 00 44 00 45 00 46 00 FF FF 00 00
090   00 00 00 00 00 00 00 00 00 00 00 00 00 00 00 00
0A0   00 00 00 00 00 00 00 00 00 00 00 00 00 00 00 00
0B0   00 00 00 00 00 00 00 00 00 00 00 00 00 00 00 00
0C0   FF FF 1C 00 00 00 00 00 00 00 00 00 00 00 00 00
0D0   00 00 00 00 00 00 00 00 00 00 00 00 00 00 00 00
0E0   00 00 00 00 00 00 00 00 00 00 00 00 00 00 00 00
0F0   00 00 00 00 00 00 00 00 00    00 00 00 00 00 00
```

It is now necessary to look at the Root Directory as shown in Table 3 below.

**Partial Hex Dump of Original Root Directory Sector**

### TABLE 3

```
000   46 49 4C 45 31 20 20 20 54 20 00 00 00 00 00 00   FILE1...TXT.
010   00 00 00 00 00 00 00 60 71 0E 02 00 DB 62 00 00   ............
020   46 49 4C 45 31 20 20 20 54 20 00 00 00 00 00 00   FILE2...TXT.
030   00 00 00 00 00 00 00 60 71 0E 1B 00 DB 62 00 00   ............
040   46 49 4C 45 31 20 20 20 54 20 00 00 00 00 00 00   FILE3...TXT.
050   00 00 00 00 00 00 00 60 71 0E 34 00 DB 62 00 00   ............
060   00 00 00 00 00 00 00 00 00 00 00 00 00 00 00 00   ............
070   00 00 00 00 00 00 00 00 00 00 00 00 00 00 00 00   ............
080   00 00 00 00 00 00 00 00 00 00 00 00 00 00 00 00   ............
090   00 00 00 00 00 00 00 00 00 00 00 00 00 00 00 00   ............
0A0   00 00 00 00 00 00 00 00 00 00 00 00 00 00 00 00   ............
0B0   00 00 00 00 00 00 00 00 00 00 00 00 00 00 00 00   ............
0C0   00 00 00 00 00 00 00 00 00 00 00 00 00 00 00 00   ............
0D0   00 00 00 00 00 00 00 00 00 00 00 00 00 00 00 00   ............
0E0   00 00 00 00 00 00 00 00 00 00 00 00 00 00 00 00   ............
0F0   00 00 00 00 00 00 00 00 00 00 00 00 00 00 00 00   ............
```

The Starting Cluster references are shown underlined and are as follows:

```
FILE1.TXT   Starting Cluster 0002 (hex)  2 (Decimal)
FILE2.TXT   Starting Cluster 001B (hex) 27 (Decimal)
FILE3.TXT   Starting Cluster 0034 (hex) 52 (Decimal)
```

The translation table shows cluster 27 is re-mapped to cluster 192 and, therefore, the starting cluster reference of FILE2.TXT is changed to 192 (00C0 hex), as shown in Table 4.

**Partial Hex Dump of Root Directory Sector After References Changed**

## TABLE 4

```
000  46 49 4C 45 31 20 20 20 54 20 00 00 00 00 00 00  FILE1...TXT.....
010  00 00 00 00 00 00 00 60 71 0E 02 00 DB 62 00 00  ................
020  46 49 4C 45 31 20 20 20 54 20 00 00 00 00 00 00  FILE2...TXT.....
030  00 00 00 00 00 00 00 60 71 0E CO 00 DB 62 00 00  ................
040  46 49 4C 45 31 20 20 20 54 20 00 00 00 00 00 00  FILE3...TXT.....
050  00 00 00 00 00 00 00 60 71 0E 34 00 EB 62 00 00  ................
060  00 00 00 00 00 00 00 00 00 00 00 00 00 00 00 00  ................
070  00 00 00 00 00 00 00 00 00 00 00 00 00 00 00 00  ................
080  00 00 00 00 00 00 00 00 00 00 00 00 00 00 00 00  ................
090  00 00 00 00 00 00 00 00 00 00 00 00 00 00 00 00  ................
0A0  00 00 00 00 00 00 00 00 00 00 00 00 00 00 00 00  ................
0B0  00 00 00 00 00 00 00 00 00 00 00 00 00 00 00 00  ................
0C0  00 00 00 00 00 00 00 00 00 00 00 00 00 00 00 00  ................
0D0  00 00 00 00 00 00 00 00 00 00 00 00 00 00 00 00  ................
0E0  00 00 00 00 00 00 00 00 00 00 00 00 00 00 00 00  ................
0F0  00 00 00 00 00 00 00 00 00 00 00 00 00 00 00 00  ................
```

Sub-directory references are treated in exactly the same way as the root directory.

A preferred feature of the backup method described above is the recording of the time of each write operation. By recording the exact date and time of each and every disk write onto the tape, data may be replayed up to any given point in time. Replay can be suspended to enable the copying of files and then resumed any number of times. It is also possible in the preferred method in accordance with the invention to calculate the file name currently being updated so that it is a simple matter to reconstruct data to any stage and all states of the disk and hence the files contained within it are recorded. The suspension of replay allows the user to recover information that may later have been deleted.

The software described above loads automatically when the user switches on the computer and makes a complete copy of all changes to the disk up to the point at which the machine is switched off. It thus provides a complete "audit trail" of every change made to the disk as it happens. The entire operation happens automatically without affecting normal operation of the computer. Data is not lost and the user has a complete backup which can be removed immediately.

In the preferred method, the software allows the user to select any combination of a plurality of physical or logical hard disk drives (or other storage devices) to be monitored. The system is thus particularly suitable for network systems.

The preferred method also has the following features:-

Tape Marks: The user can at any time place a 'mark' on the backup tape to signify some event. This mark can include a user defined text message, and assists in recovering data to a specified point. The replay option always stops and displays the comment when it encounters a tape mark.

Fail Safe Operation: In the event of corruption or power failure, data is preserved up to the moment before the failure occurred, the writing of an end of data mark to the tape is not required.

Turnkey Operation: The AUTOEXEC file can include commands to continue the current real time backup from the point it left off. The previous tape can continue to be used or a fresh one substituted. Even if both tape drive and PC were completely powered off, the backup software uses a high speed seeking algorithm to find the end of the recorded data and continue from that point. If the tape drive power was not cut (even if the PC was re-booted) then no seeking is required and the backup continues immediately. The backup software knows how much tape has been used and how much remains, even after a total power failure.

End of Tape and Alarm Warnings: The configuration contains a user-defined alarm setting. When this amount of data has been written, the backup software sounds a continuous two-tone alarm to notify the user that the tape is running out. Operation of the currently running software package is not affected. This alarm also sounds in the event of tape failure for whatever reason. The user can adjust the configuration file to abandon real time backup in the event of tape drive failure, or to set the hard disk to read-only to prevent further updates whilst the problem is rectified.

From the point of view of the user the principle of operation is as follows:-

1) A simple configuration file enables the user to select any combination of up to three physical or logical hard disk drives to be monitored.

2) A "snapshot" option of the backup software is then used to recall mirror images of the appropriate drive or drives.

3) The backup operation is then activated, automatically recording changes to the hard drive as they happen.

4) Should it become necessary to reconstruct the disk due to an error, or on request, the user copies the mirror image back to the drive and then replays the backup tape to reconstruct the disk up to the moment before the error, or requested point occurred.

## Claims

1. A method of operating a microprocessor-based data processing system including a random access memory (14), a central processing unit (12) and a non-volatile storage device (16), in which the central processing unit (12), operating according to instructions stored in the memory (14), is caused to write data periodically to basic storage means (16) forming at least part of the storage device (16), characterised in that, for a plurality of such write operations the central processing unit (12) is caused by the said instructions to execute a plurality of corresponding backup write operations to write the same data to backup storage means (18), each backup write operation being performed by means of a software routine stored in the memory (14), the said routine being associated with a routine for executing the said write operations for writing data to the basic storage means, and in that the backup write operations are controlled such that the data for successive backup write operations are stored at different locations in the backup storage means (18) whereby data which is overwritten in the basic storage (16) means is retained in the backup storage means (18).

2. A method according to claim 1, characterised in that the backup write operations comprise writing the said same data to another non-volatile storage device (18).

3. A method according to any preceding claim, characterised in that the instructions for causing the backup write operations are stored and are executed at the basic input/output level of the data processing system.

4. A method according to any preceding claim, characterised in that information copied to the backup storage means (18) is stored as a sequential list of write operations (DW1, DW2, DW3, DW4, DW5).

5. A method according to any preceding claim, characterised in that each write operation is stored in the backup storage means as a location element (L) and a data element (D), the location element (L) containing information relating to the location of the data when stored in the basic storage means (16).

6. A method according to claim 5, characterised in that each location element (L) has associated with it information relating to the date and/or time of the corresponding write operation.

7. A method according to any preceding claim, including the restoring of data from the backup storage means (18) to destination storage means, wherein the restoring step comprises determining the location of faulty parts of the destination storage means and establishing a translation table for substituting new location elements in place of the stored location elements so that data can be restored to correctly functioning parts of the destination storage means.

8. A method according both to claim 5 or 6 and to claim 7, characterised in that the translation table is established in the memory, and wherein the steps of location and substitution include reading a location block from the backup storage means, assigning a new location if the location in the destination storage means represented by the said location block is faulty and registering the new location in the translation table in association with the former location, reading the data block (D) associated with the location block (L) from the backup storage means and writing it to the destination storage means, repeating the reading, assigning, reading and writing steps until all the data required to be restored has been restored to the destination storage means.

9. A method according to claim 7 or 8, further including alteration of a file allocation table and directories associated with the original data.

10. A method according to claim 9, characterised in that the step of alteration includes the steps of scanning the file allocation table and directory and altering address references therein of locations which are indicated by the translation table as having been changed.

11. A method according to any of claims 7 to 10, characterised in that the instructions of controlling the restoring of data are stored and executed at the basic input/output level of the data processing system.

12. A method according to any of claims 7 to 11, characterised in that the translation table is established at the basic input/output level of the data processing system.

13. A method according to any of claims 7 to 12, characterised by determining the name of the file currently being updated.

14. A method according to any preceding claim, characterised in that the instructions include instructions responsive to user input to include a 'mark' on the backup storage means in the sequence of backup data.

15. A microprocessor-based data processing system, comprising a random access memory (14), a central processing unit (12), a non-volatile basic storage means (16), and non-volatile backup storage means (18), characterised in that the system is programmed to perform a backup write step corresponding to each write operation (DW1, DW2, DW3, DW4, DW5) in which data is written to the basic storage means (16), the backup write steps comprising the writing of the write operation to the backup storage means (18) as a location block (L) and a data block (D), the location block (L) containing information relating to the location of the data block (D) in the basic storage means; and wherein the system is further programmed to write successive said write operations to the backup storage means as a sequential list, each location (L) and data block (D) pair being stored in a different respective location in the backup storage means (18);
the backup write step being performed according to a software routine stored in said memory (14) and associated with a routine for executing said write operation in which data is written to said basic storage means.

16. A system according to claim 15, characterised in that the memory has stored therein instructions for performing the backup write step, the instructions being stored at the level of the basic input/output system (BIOS).

17. A system according to 15 or 16, further including destination storage means for storing data stored in the backup means, and wherein the system is programmed to perform a restoring process which includes establishing a translation table in the memory; reading a location block (L) from the backup storage means (18); assigning a new location if the location in the destination storage means represented by the said location block (L) is faulty and registering the new location in the translation table in association with the former location; reading the data block (D) associated with the location block (L) from the backup storage means; and writing it to the destination storage means; and repeating the reading, assigning, reading, and writing steps until all the data required to be restored has been restored to the destination storage means.

18. A system according to claim 17, arranged to store a file allocation table and a directory, characterised in that the system is further programmed to scan the file allocation table and directory, and to alter address references therein of locations which are indicated by the translation table as having been changed.

19. A system according to any of claims 15 to 18, characterised in that each location element (L) has associated with it information relating to the date and/or time of the corresponding write operation.

**20.** A system according to any of claims 15 to 19, characterised by means for determining the name of the file currently being updated.

**21.** A system according to any of claims 15 to 20, characterised by means responsive to user input to include a 'mark' on the backup storage means in the sequence of backup data.

## Patentansprüche

**1.** Verfahren zum Betreiben eines Datenverarbeitungssystems auf Mikroprozessorbasis, mit einem Speicher mit wahlfreiem Zugriff (14) , einer Zentralverarbeitungseinheit (CPU) (12) und einer permanenten Speichervorrichtung (16), wobei die Zentralverarbeitungseinheit (12) die gemäß den in dem Speicher (14) gespeicherten Instruktionen arbeitet, veranlaßt wird, Daten periodisch auf Grundspeichermittel (16) zu schreiben, die mindestens Teil der Speichervorrichtung (16) ist, **dadurch gekennzeichnet**, daß eine Mehrzahl von solchen Schreiboperationen die Zentralverarbeitungseinheit durch die Instruktionen veranlaßt wird, eine Mehrzahl von entsprechenden Backup-(Sicherungs)-Schreiboperationen durchzuführen, um dieselben Daten auf Backup-Speichermittel (18) zu schreiben, wobei jede Backup-Schreiboperation mittels einer in dem Speicher (14) gespeicherten Softwareroutine ausgeführt wird, wobei die Routine mit einer Routine zum Ausführen der Schreiboperationen zum Schreiben von Daten auf die Grundspeichervorrichtung verbunden ist, und wobei die Backup-Schreiboperationen so gesteuert werden, daß die Daten für aufeinanderfolgende Backup-Schreiboperationen an verschiedenen Stellen im Backup-Speichermittel (18) gespeichert werden, wodurch Daten, die in dem Grundspeichermittel (16) überschrieben werden, in dem Backup-Speichermittel (18) behalten werden.

**2.** Verfahren nach Anspruch 1, **dadurch gekennzeichnet**, daß die Backup-Schreiboperationen das Schreiben derselben Daten auf eine andere permanente Speichervorrichtung (18) beinhalten.

**3.** Verfahren nach Anspruch 1 oder 2, **dadurch gekennzeichnet**, daß die Instruktionen zum Bewirken der Backup-Schreiboperationen gespeichert sind und auf der Grund-Eingabe/AusgabeEbene des Datenverarbeitungssystems ausgeführt werden.

**4.** Verfahren nach einem der vorhergehenden Ansprüche, **dadurch gekennzeichnet**, daß die auf die Backup-Speichermittel (18) kopierten Informationen als eine sequentielle Liste von Schreiboperationen (DW1, DW2, DW3, DW4, DW5) gespeichert sind.

**5.** Verfahren nach einem der vorhergehenden Ansprüche, **dadurch gekennzeichnet**, daß jede Schreiboperation in dem Backup-Speichermittel als ein Ortselement (L) und ein Datenelement (D) gespeichert sind, wobei das Ortselement (L) Informationen enthält, die sich auf den Ort der Daten beim Speichern in das Grundspeichermittel (16) beziehen.

**6.** Verfahren nach Anspruch 5, **dadurch gekennzeichnet**, daß jedes Ortselement (L) ihm zugeordnete Informationen hat, die sich auf das Datum und/oder die Zeit der entsprechenden Schreiboperationen beziehen.

**7.** Verfahren nach einem der vorhergehenden Ansprüche, **gekennzeichnet durch** das Wiederherstellen von Daten von den Backup-Speichermitteln (18) auf Zielspeichermittel, wobei der Wiederherstellungsschritt das Bestimmen des Ortes von fehlerhaften Teilen der Zielspeichermittel und das Einrichten einer Übersetzungstabelle zum Austauschen von neuen Ortselementen anstelle des gespeicherten Ortselements umfaßt, so daß Daten auf korrekt funktionierende Teile der Zielspeichermittel wiederhergestellt werden können.

**8.** Verfahren nach einem der Ansprüche 5 oder 6 und Anspruch 7, **dadurch gekennzeichnet**, daß die Übersetzungstabelle in dem Speicher (14) eingerichtet wird, und wobei die Schritte Bestimmen des Orts und Austauschen das Lesen eines Ortsblockes von den Backup-Speichermitteln, das Zuteilen eines neuen Ortes, falls der Ort in den Zielspeichermitteln, der durch den Ortsblock dargestellt ist, fehlerhaft ist, und das Aufzeichnen des neuen Ortes in der Übersetzungstabelle in Verbindung mit dem vorherigen Ort, Lesen des mit dem Ortsblock (L) verbundenen Datenblocks (D) von den Backup-Speichermitteln und Schreiben dessen auf die Zielspeichermittel, Wiederholen der Lese-, Zuordnungs-, Lese- und Schreibschritte, bis alle wiederherzustellenden Daten auf den Zielspeichermitteln wiederhergestellt sind.

9. Verfahren nach Anspruch 7 oder 8, **gekennzeichnet durch** weiterhin das Ändern einer Dateizuordnungstabelle und von Verzeichnissen, die den Originaldaten zugeordnet sind.

10. Verfahren nach Anspruch 9, **dadurch gekennzeichnet**, daß der Schritt des Änderns die Schritte des Abtastens der Dateizuordnungstabelle und des Verzeichnisses und des Änderns der darin vorhandenen Adressreferenzen von Orten aufweist, die von der Übersetzungstabelle als geändert angegeben werden.

11. Verfahren nach einem der Ansprüche 7-10, **dadurch gekennzeichnet**, daß die Instruktionen zum Steuern der Datenwiederherstellung auf der Grund-Eingabe/Ausgabe-Ebene des Datenverarbeitungssystems gespeichert und ausgeführt werden.

12. Verfahren nach einem der Ansprüche 7-11, **dadurch gekennzeichnet**, daß die Übersetzungstabelle auf der Grund-Eingabe/Ausgabe-Ebene des Datenverarbeitungssystems eingerichtet wird.

13. Verfahren nach einem der Ansprüche 7-12, **gekennzeichnet durch** die Festlegung des Namens der Datei, die momentan verändert wird.

14. Verfahren nach einem der vorhergehenden Ansprüche, **dadurch gekennzeichnet**, daß die Instruktionen solche Instruktionen beinhalten, die durch eine Benutzereingabe aktivierbar sind, um eine "Markierung" in die Sequenz von auf die Backup-Speichermittel (18) zu schreibenden Backup-Daten einzufügen.

15. Datenverarbeitungssystem auf Mikroprozessorbasis mit einem Speicher mit wahlfreiem Zugriff (14), einer Zentralverarbeitungseinheit (CPU) (12), einem permanenten Grundspeichermittel (16) und einem permanenten Backup-Speichermittel (18), **dadurch gekennzeichnet**, daß das System so programmiert ist, daß es einen Backup-Schreibschritt entsprechend jeder Schreiboperation (DW1, DW2, DW3, DW4, DW5) durchführt, in welcher Daten in das Grundspeichermittel (16) geschrieben werden, wobei die Backup-Schreibschritte das Schreiben der Schreiboperation auf das Backup-Speichermittel (18) als ein Ortsblock (L) und ein Datenblock (D) umfaßt, und der Ortsblock (L) Informationen enthält, die sich auf den Ort des Datenblocks (D) in dem Grund-Speichermittel beziehen und wobei das System weiterhin so programmiert ist, daß es aufeinanderfolgende Schreiboperationen in das Backup-Speichermittel als eine sequentielle Liste schreibt, wobei jedes Orts-(L) und Datenblockpaar (D) an einem anderen jeweiligen Ort in dem Backup-Speichermittel (18) gespeichert ist, wobei der Backup-Schreibschritt entsprechend einer in dem Speicher (14) gespeicherten Softwareroutine durchgeführt wird, wobei die Routine mit einer Routine zum Ausführen der Scheiboperation verbunden ist, in welcher Daten auf die Grundspeichermittel geschrieben werden.

16. System nach Anspruch 15, **dadurch gekennzeichnet,** daß in dem Speicher Instruktionen zum Durchführen des Backup-Schreibschrittes gespeichert sind, wobei die Instruktionen auf der Ebene des Grund-Eingabe/Ausgabesystems (BIOS) gespeichert sind.

17. System nach Anspruch 15 oder 16, welches weiterhin Zielspeichermittel zum Speichern von Daten, die in dem Backup-Speichermittel gespeichert sind, beinhaltet und wobei das System so programmiert ist, daß es einen Wiederherstellungsprozeß durchführt, welcher das Einrichten einer Übersetzungstabelle in dem Speicher, das Lesen einer Ortsblockes (L) aus dem Backup-Speichermittel (18), das Zuordnen eines neuen Ortes, wenn der Ort in dem Zielspeichermittel, dargestellt durch den Ortsblock (L), fehlerhaft ist und das Aufzeichnen des neuen Orts in der Übersetzungstabelle in Verbindung mit dem vorherigen Ort, das Lesen des mit dem Ortsblock (L) verbundenen Datenblocks (D) von dem Backup-Speichermittel und das Schreiben dessen auf das Zielspeichermittel, das Wiederholen der Lese-, Zuordnungs-, Lese- und Schreibschritte, bis alle wiederherzustellenden Daten wieder in dem Zielspeichermittel wiederhergestellt sind, beinhaltet.

18. System nach Anspruch 17, welches so ausgebildet ist, daß es eine Datenzuordnungstabelle und ein Verzeichnis speichert, **dadurch gekennzeichnet**, daß das System weiterhin so programmiert ist, daß es die Dateizuordnungstabelle und das Verzeichnis durchsucht und die Adressenreferenzen von Orten darin ändert, für die die Übersetzungstabelle anzeigt, daß sie geändert worden sind.

19. System nach einem der Ansprüche 15-18, **dadurch gekennzeichnet**, daß jedes Ortselement (L) ihm zugeordnete Informationen hat, die sich auf das Datum und/oder die Zeit der entsprechenden Schreiboperation beziehen.

20. System nach einem der Ansprüche 15-19, **gekennzeichnet durch** eine Vorrichtung zur Festlegung des Namens der Datei, die momentan geändert wird.

21. System nach einem der Ansprüche 15-20, **gekennzeichnet durch** eine Vorrichtung, die auf eine Benutzereingabe ansprechbar ist, um eine "Markierung" in die Sequenz von auf die Backup-Speichermittel zu schreibenden Backup-Daten einzufügen.

## Revendications

1. Un procédé de gestion d'un système de traitement de données à base de microprocesseur qui inclut une mémoire vive (14), une unité centrale de traitement (12) et un dispositif de mémoire non volatile (16), dans lequel l'unité centrale de traitement (12), qui gère en fonction d'instructions mémorisées dans la mémoire (14), est amenée à écrire périodiquement des données dans un moyen de mémoire de base (16) qui forme au moins une partie du dispositif de mémoire (16), caractérisé en ce que l'unité centrale de traitement (12) est amenée par lesdites instructions à exécuter, pour une série de telles opérations d'écriture, une série d'opérations correspondantes d'écriture de sauvegarde afin d'écrire les mêmes données dans un moyen de mémorisation de sauvegarde (18), chaque opération d'écriture de sauvegarde étant exécutée au moyen d'un sous-programme de logiciel mémorisé dans la mémoire (14), ledit sous-programme étant associé à un sous-programme d'exécution desdites opérations d'écriture destiné à écrire des données dans le moyen de mémorisation de base, et en ce que les opérations d'écriture de sauvegarde sont commandées d'une manière telle que les données concernant des opérations successives d'écriture de sauvegarde sont mémorisées à des emplacements différents dans le moyen de mémorisation de sauvegarde (18) grâce à quoi une donnée qui est écrasée dans le moyen de mémorisation de base (16) est retenue dans le moyen de mémorisation de sauvegarde (18).

2. Un procédé selon la revendication 1, caractérisé en ce que les opérations d'écriture de sauvegarde comprennent une écriture desdites mêmes données dans un autre dispositif de mémoire non volatile (18).

3. Un procédé selon une revendication précédente quelconque, caractérisé en ce que les instructions destinées à provoquer les opérations d'écriture de sauvegarde sont mémorisées et sont exécutées au niveau de base d'entrée/sortie du système de traitement de données.

4. Un procédé selon une revendication précédente quelconque, caractérisé en ce qu'une information copiée dans le moyen de mémorisation de sauvegarde (18) est mémorisée sous forme d'une liste séquentielle d'opérations d'écriture (DW1, DW2, DW3, DW4, DW5).

5. Un procédé selon une revendication précédente quelconque, caractérisé en ce que chaque opération d'écriture est mémorisée dans le moyen de mémorisation de sauvegarde sous forme d'un élément d'emplacement (L) et d'un élément de donnée (D), l'élément d'emplacement (L) contenant une information concernant l'emplacement de la donnée lorsqu'elle est mémorisée dans le moyen de mémorisation de base (16).

6. Un procédé selon la revendication 5, caractérisé en ce qu'une information concernant la date et/ou l'heure de l'opération correspondante d'écriture est associée à chaque élément d'emplacement (L).

7. Un procédé selon une revendication précédente quelconque, incluant la restauration de données à partir du moyen de mémorisation de sauvegarde (18) vers un moyen de mémorisation de destination, dans lequel l'étape de restauration comprend une détermination de l'emplacement de parties défectueuses du moyen de mémorisation de destination et l'établissement d'une table de traduction pour substituer de nouveaux éléments d'emplacement au lieu des éléments d'emplacement mémorisés de façon que des données puissent être restaurées vers des parties du moyen de mémorisation de données dont le fonctionnement est correct.

8. Un procédé selon l'une quelconque des revendications 5 ou 6 et selon la revendication 7, caractérisé en ce que la table de traduction est établie dans la mémoire et dans lequel les étapes d'emplacement et de substitution comprennent les étapes consistant à lire dans le moyen de mémorisation de sauvegarde un bloc d'emplacement, assigner un nouvel emplacement si l'emplacement représenté par ledit bloc d'emplacement dans le moyen de mémorisation de destination est défectueux et enregistrer dans la table de traduction le nouvel emplacement en association avec l'emplacement antérieur, lire dans le moyen de mémorisation de sauvegarde le bloc de donnée (D) associé au bloc d'emplacement (L) et l'écrire dans le moyen de mémorisation de destination, répéter les étapes de lecture, d'assignation, de lecture et d'écriture jusqu'à de que toute la donnée qui doit être restaurée ait été restaurée dans le moyen de mémorisation de destination.

9. Un procédé selon la revendication 7 ou 8, incluant en outre une modification d'une table d'allocation de fichier et de répertoires associés à la donnée d'origine.

10. Un procédé selon la revendication 9, caractérisé en ce que l'étape de modification inclut les étapes consistant à explorer la table d'emplacement de fichier et le répertoire et y modifier des références d'adresses d'emplacements qui sont indiquées par la table de traduction comme ayant été modifiées.

11. Un procédé selon l'une quelconque des revendications 7 a 10, caractérisé en ce que les instructions de commande de la restauration de donnée sont mémorisées et exécutées au niveau d'entrée/sortie de base du système de traitement de données.

12. Un procédé selon l'une quelconque des revendications 7 à 11, caractérisé en ce que la table de traduction est établie au niveau d'entrée/sortie de base du système de traitement de données.

13. Un procédé selon l'une quelconque des revendications 7 à 12, caractérisé par une détermination du nom du fichier actuellement en cours de mise à jour.

14. Un procédé selon une revendication précédente quelconque, caractérisé en ce que les instructions incluent des instructions qui répondent à une entrée d'utilisateur pour inclure une "marque" sur le moyen de mémorisation de sauvegarde dans la séquence de donnée de sauvegarde.

15. Un système de traitement de données à base de microprocesseur qui comprend une mémoire vive (14), une unité centrale de traitement (12), un moyen de mémoire non volatile de base (16), et un moyen de mémoire non volatile de sauvegarde (18), caractérisé en ce que le système est programmé de façon à exécuter une étape d'écriture de sauvegarde qui correspond à chaque opération d'écriture (DW1, DW2, DW3, DW4, DW5) dans laquelle une donnée est écrite dans le moyen de mémorisation de base (16), les étapes d'écriture de sauvegarde comprenant les étapes consistant à écrire l'opération d'écriture dans le moyen de mémorisation de sauvegarde (18) sous la forme d'un bloc d'emplacement (L) et d'un bloc de donnée (D), le bloc d'emplacement (L) contenant une information qui concerne l'emplacement du bloc de donnée (D) dans le moyen de mémorisation de base; et dans lequel le système est programmé en outre pour écrire, dans le moyen de mémorisation de sauvegarde, lesdites opérations successives d'écriture sous forme d'une liste séquentielle, chaque paire formée d'un bloc d'emplacement (L) et d'un bloc de donnée (D) étant mémorisée dans un emplacement respectif différent dans le moyen de mémorisation de sauvegarde (18);
l'étape d'écriture de sauvegarde étant effectuée en fonction d'un sous-programme de logiciel mémorisé dans ladite mémoire (14) et associé à un sous-programme d'exécution de ladite opération d'écriture dans laquelle une donnée est écrite dans ledit moyen de mémorisation de base.

16. Un système selon la revendication 15 caractérisé en ce que des instructions destinées à l'exécution de l'étape d'écriture de sauvegarde sont mémorisées dans la mémoire, les instructions étant mémorisées au niveau du système d'entrée/sortie de base (BIOS).

17. Un système selon la revendication 15 ou 16, incluant en outre un moyen de mémorisation de destination pour mémoriser une donnée mémorisée dans le moyen de sauvegarde, et dans lequel le système est programmé pour effectuer un processus de restauration qui inclut les étapes consistant à: établir dans la mémoire une table de traduction; lire dans le moyen de mémoire de sauvegarde (18) un bloc d'emplacement (L); assigner une nouvel emplacement si l'emplacement représenté par ledit bloc d'emplacement (L) dans le moyen de mémorisation de destination est défectueux et enregistrer dans la table de traduction le nouvel emplacement en association avec l'emplacement antérieur; lire dans le moyen de mémorisation de sauvegarde le bloc de donnée (D) associé au bloc d'emplacement (L); et l'écrire dans le moyen de mémorisation de destination, répéter les étapes de lecture, d'assignation, de lecture et d'écriture jusqu'à de que toute la donnée qui doit être restaurée ait été restaurée dans le moyen de mémorisation de destination.

18. Un système selon la revendication 17, agencée de mgnière à mémoriser une table d'allocation de fichier et un répertoire, caractérisé en ce que le système est programmé en outre pour explorer la table d'emplacement de fichier et le répertoire et y modifier des références d'adresses d'emplacements qui sont indiquées par la table de traduction comme ayant été modifiées.

19. Un système selon l'une quelconque des revendications 15 à 18, caractérisé en ce qu'il est associé, à chaque élément d'emplacement (L), une information qui concerne la date et/ou l'heure de l'opération d'écriture correspondante.

20. Un système selon l'une quelconque des revendications 15 à 19, caractérisé par un moyen de détermination du nom du fichier actuellement en cours de mise à jour.

21. Un système selon l'une quelconque des revendications 15 à 20, caractérisé par un moyen qui répond à une entrée d'utilisateur pour inclure une "marque" sur le moyen de mémorisation de sauvegarde dans la séquence de donnée de sauvegarde.

FIG.1.

INT 13h
Entry Point

BIOS
PROGRAM
CODE

FIG.2A.

FIG.2B.

BIOS
PROGRAM
CODE

New INT 13h
Entry Point

CODE

| DW1 | DW2 | DW3 | DW4 | DW5 |
|-----|-----|-----|-----|-----|
| L | D | L | D | L | D | L | D | L | D |

*FIG.3.*

INT 13h CALL

```
                    DISK
            N      WRITE?      20
         ←──────────────
                    │Y
                    ↓
              PUSH ONTO     22
                STACK
                    │
                    ↓
                WRITE        24
              LOCATION
                    │
                    ↓
                COPY         26
                DATA
                    │
                    ↓
              POP OFF        28
                STACK
                    │
                    ↓
```

*FIG.4.*

BEGIN

READ BACKUP HEADER ⟋ 30

SET UP TRANSLATION TABLE ⟋ 32

READ LOCATION BLOCK ⟋ 34

BAD AREA ? ⟋ 36

N          Y

ASSIGN ALTERNATIVE SECTOR, ETC. ⟋ 38

READ DATA BLOCK ⟋ 40

WRITE DATA BLOCK ⟋ 42

MORE DATA ? ⟋ 44

Y          N

SCAN DESTINATION FAT, ETC. ⟋ 46

END

*FIG.5.*